# EUROPEAN PATENT APPLICATION

(11) **EP 1 316 377 A2**
(43) Date of publication of application: **04.06.2003**
(21) Application number: 02258023.7
(22) Date of filing: 21.11.2002
(51) Int. Cl.: B23D 47/02, B23D 51/02, B23D 55/02

(54) **Motorized wood working tool having a low friction table**

(30) Priority: 26.11.2001 US 995370
(71) Applicant: TechTronic Industries Co., Ltd., Tsuen Wan, New Territories, Hong Kong (CN)
(72) Inventor: Wilke, Thomas Dale, Yau Kom Tau, Tsuen Wan, Kowloon (HK); Plagge, Helmut Herman, Happy Valley (HK)
(74) Representative: Bucks, Teresa Anne

(57) **Abstract**

A motorized woodworking tool is provided having a base with a metal top having a generally planar workpiece support surface. The workpiece support surface is coated with a fluoropolymer layer to provide a low friction, highly durable surface to support a workpiece to be cut.

## Description

### BACKGROUND OF THE INVENTION

### 1. Field of the Invention

The present invention relates to motorized woodworking tools having a generally flat, planar, metal table top for supporting a workpiece to be cut.

### 2. Background Art

Motorized wood working tools, both floor mounted or bench types are frequently provided with a generally horizontal table surface to support a wooden work piece to be cut. Representative tools having a planar table top include scroll saws, table saws, band saws, surface planers, joiner planers, belt sanders, disc sanders, router tables, jig saw base plates and miter saw tables. Common to all of these motorized wood working tools is the presence of a generally flat horizontal table top which the user supports a workpiece to be cut by a motor driven cutting element such as a saw blade. Frequently, particularly when making a precise free hand cut using a scroll saw or a band saw, it is highly desirable to minimize the friction between the workpiece and the table top so that the pattern marked on the workpiece can be closely followed. On circular table saws where cutting normally takes place using a fence, it is still desirable to minimize friction between the workpiece and the table so that the workpiece can be smoothly fed relative to the cutting element at a constant speed without sticking and bonding.

Traditionally, the table top of a motorized woodworking floor mounted or bench top tool would be a metal plate having a generally flat planar surface which is then machined flat when used in the 'as machined" state. In the case of scroll saws and small light duty band saws, the table top will be frequently formed of an aluminum die casting. In such instances, the table top is machined flat and often coated with a clear finish in order to prevent corrosion and staining. Even with this clear coat applied to the machine table top, friction levels between the workpiece and the table top are higher than desired.

### SUMMARY OF THE INVENTION

Accordingly, the motorized woodworking tool of the present invention is provided with a base, having a metal table top with a generally planar workpiece support surface with an opening formed therein. The tool further includes a motor which drives a cutting blade oriented to extend through the opening of the workpiece support surface. The workpiece support surface of the metal table top is provided with a coating of a fluoropolymer which is applied thereto in order to form a low friction surface to cooperate with a workpiece placed thereon. Preferably, the fluoropolymer is one selected from a group consisting of polytetrafluoroethylene, fluorinated ethylene propylene copolymer, perfluoroalkoxy and copolymer of ethylene and tetrafluoroethylene, which are frequently referred to a Teflon®, a trade name of Dupont Corporation. The invention is suitable for use with scroll saws, table saws and band saws where the workpiece is slid across the support surface relative to the cutting blade during use. Preferably, the metal table top is formed of cast iron, die cast aluminum or cast aluminum with the planar work surface being finish machined prior to the application of the fluoropolymer coating.

### BRIEF DESCRIPTION OF THE DRAWINGS

FIGURE 1 is a scroll saw embodiment of the present invention;
FIGURE 2 is a table saw having a rotary circular blade; and
FIGURE 3 is a band saw embodiment of the present invention.

### DETAILED DESCRIPTION OF THE PREFERRED EMBODIMENT(S)

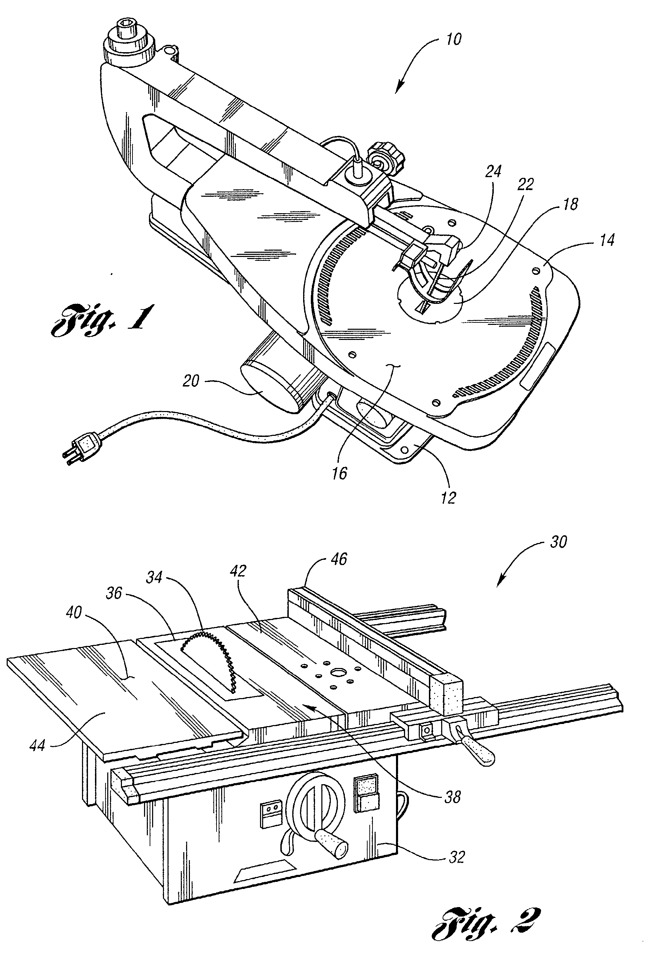

Figure 1 illustrates a scroll saw 10 providing a first embodiment of the claimed invention. Scroll saw 10 is provided with a base 12 having a metal table top 14 pivotally mounted thereto in a conventional manner. Metal table top 14 is provided with a generally planar work support surface 16 having an opening 18 extending therethrough. A motor 20 is attached to base 12 and operatively connected to a saw blade 22 which is affixed to a pair of blade holders; upper blade holder 24 and a similar blade holder not shown located below the underside of the table top 14 in a conventional manner. During operation, motor 20 causes elongate blade 22 to oscillate vertically relative a workpiece placed on the planar workpiece support surface 16 to be slid relative to the blade during cutting.

Metal table top 14 is preferably made of iron or aluminum with the planar workpiece support surface machined flat. The planar workpiece support surface is then coated with a fluoropolymer layer which is preferably baked thereon to provide a smooth, uniform, low friction, highly durable coating. Preferably, the fluoropolymer utilized is one of the several types commonly sold under the trademark Teflon® by Dupont Corporation. The preferred fluoropolymers include polytetrafluoroethylene, fluorinated ethylene propylene copolymer, perfluoroalkoxy and copolymer of ethylene and tetrafluoroethylene. Depending upon the formulation of the fluoropolymer selected, it may be necessary to apply a suitable primer coat as recommended the fluoropolymer supplier in order to obtain optimum adhesion. The resulting coating exhibits low, friction, non-stick characteristics, enabling the workpiece to be freely moved relative to the cutting blade.

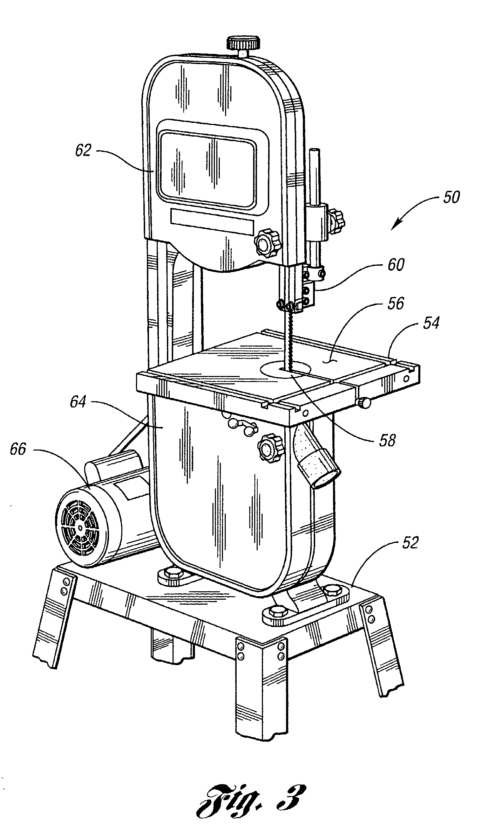

Figure 2 illustrates a table saw 30 incorporating the present invention. Table saw 30 is provided with a base 32 having a motor located internally thereto which drives a circular rotary cutting blade 34. Blade 34 extends through a slot 36 in a metal table top 38 having a generally flat planar workpiece support surface 40. Table top 38 may be made of die cast aluminum or cast iron, with the top surface being machined flat prior to the application of a fluoropolymer coating. In the embodiment illustrated, table saw 30 is provided with a pair of generally planar table wings 42 and 44 which likewise have a flat, generally planar surface coplanar with surface 40. Table wings 42 and 44 are likewise provided with a fluoropolymer coating to provide a low friction surface. If desired, the movable fence 46 is similarly coated with a fluoropolymer coating to provide a low friction surface for engaging a workpiece to be cut on the table saw.

The band saw embodiment 50 of the present invention is illustrated in Figure 3. The band saw is provided with a base 52 having a tiltable metal table top 54 with a generally planar work support surface 56. The table top 54 is further provided with an aperture 58 extending therethrough to receive band saw blade 60. Band saw blade 60 is a traditional, endless loop type blade which is entrained about a pair of wheels 62 and 64 shown in phantom outline above and below the metal table top 54 as illustrated. Motor 66 is operatively connected to one of the wheels, preferably, lower wheel 64, to cause the blade to move in an oval path with the exposed portion of the blade above metal table top 54, moving downward toward the planar workpiece support surface 56. As in the other described embodiments, the metal table top planar workpiece support surface is machined flat and coated with fluoropolymer coating to reduce friction.

While embodiments of the invention have been illustrated and described, it is not intended that these embodiments illustrate and describe all possible forms of the invention, for example the invention can be used with scroll saws, table saws, band saws, surface planers, joiner planers, belt sanders, disc sanders, router tables, jig saw base plates and miter saw tables. Rather, the words used in the specification are words of description rather than limitation, and it is understood that various changes may be made without departing from the spirit and scope of the invention.

## Claims

1. A motorized wood working tool (10,30,50) comprising:
a base (12) provided with a metal tabletop (14) having a generally
planar workpiece support surface (16) with an opening (18) formed therein;
a motor (20); and a cutting element (22) driven by the motor (20) and oriented to extend through the opening (18) in the workpiece support surface (16) of the tabletop (14);
wherein the workpiece support surface (16) of the tabletop (14) has a fluoropolymer coating applied thereto forming a low friction surface for cooperating with a workpiece placed thereon.

2. The motorized wood working tool of claim 1 wherein the tool comprises a scroll saw (10).

3. The motorised wood working tool of claim 2 further comprising a pair of spaced apart blade holders for supporting a blade (22) therebetween, operatively driven by the motor (20) in a reciprocal manner wherein the blade (22) spanning between the blade holders passes through the opening (18) in the table top (14).

4. The motorized wood working tool of claim 1 wherein the tool comprises a band saw (50).

5. The motorised wood working tool of claim 4 further comprising a pair of wheels (62,64) lying in a common plane, one (62) positioned above and one (64) positioned below the table top (14) wherein one of the wheels is operatively driven by the motor (20); and an endless loop cutting blade entrained about the wheels (62,64) and passing through the opening in the table top.

6. The motorized wood working tool of claim 1 wherein the tool comprises a circular table saw (30).

7. The motorised wood working tool of claim 6 further comprising a circular saw blade (34) operatively driven by the motor (20) in a rotary fashion, the saw blade (34) extending through the opening (18) formed in the support surface (16) to cut a workpiece placed thereon and moved relative to the circular saw blade (34).

8. The motorized wood working tool of any one of the preceding claims wherein a primer coating is applied to the workpiece support surface (16) to which the fluoropolymer is applied.

9. The motorized wood working tool (10,30,50) of any one of the preceding claims wherein the fluoropolymer comprises polytetrafluoroethylene.

10. The motorized wood working tool (10,30,50) of any one of the preceding claims wherein the fluoropolymer comprises fluorinated ethylene propylene copolymer.

11. The motorized wood working tool (10,30,50) of anyone of claims 1 to 8 wherein the fluoropolymer comprises perfluoroalkoxy.

12. The motorized wood working tool (10,30,50) of any one of claims 1 to 8 wherein the fluoropolymer comprises copolymer of ethylene and tetrafluoroethylene.

13. The motorized wood working tool (10,30,50) of any one of the preceding claims wherein the metal table top (14) is formed of a metal casting having a finished machine top surface to which the fluoropolymer coating is applied.

14. The motorized wood working tool (10,30,50) of claim 13 wherein the metal comprises cast iron.

15. The motorized wood working tool (10,30,50) of claim 13 wherein the metal table top (14) comprises an aluminum die casting.
